Europäisches Patentamt

European Patent Office

Office européen des brevets

(11) Numéro de publication : **0 159 236**
**B1**

(19)

## (12) FASCICULE DE BREVET EUROPÉEN

(45) Date de publication du fascicule du brevet :
30.09.87

(21) Numéro de dépôt : 85400515.4

(22) Date de dépôt : 18.03.85

(51) Int. Cl.⁴ : **B 60 T 13/24**, B 60 T 11/22,
F 16 J 15/32

(54) Emetteur de pression hydraulique et son joint annulaire d'étanchéite.

(30) Priorité : 19.03.84 FR 8404196

(43) Date de publication de la demande :
23.10.85 Bulletin 85/43

(45) Mention de la délivrance du brevet :
30.09.87 Bulletin 87/40

(84) Etats contractants désignés :
DE GB IT

(56) Documents cités :
EP-A- 0 046 339
FR-A- 1 286 775
FR-A- 2 493 783
GB-A- 860 090
GB-A- 2 017 240

(73) Titulaire : **WABCO WESTINGHOUSE EQUIPEMENTS
AUTOMOBILES**
**44, avenue Aristide Briand**
**F-77410 Claye Souilly (FR)**

(72) Inventeur : **L'Her, Didier**
**11, allée Alice**
**F-93140 Bondy (FR)**
Inventeur : **Rivaud, Guy**
**Résidence Coquelicot Bat. A**
**F-93470 Coubron (FR)**
Inventeur : **Ragot, Paul**
**27, Boulevard du Nord**
**F-93340 Le Raincy (FR)**

(74) Mandataire : **Hirsch, Marc-Roger**
**Cabinet Hirsch 34 rue de Bassano**
**F-75008 Paris (FR)**

## Description

La présente invention s'applique à un émetteur de pression hydraulique comportant un piston plongeur à surface cylindrique guidé dans un palier et mobile en translation dans une chambre hydraulique destinée à être reliée, d'une part, en permanence à au moins un organe récepteur de fluide hydraulique sous pression et, d'autre part, en position de recul extrême du piston et par l'intermédiaire d'une canalisation de réalimentation, à une source de fluide hydraulique, un joint d'étanchéité annulaire principal à deux lèvres situé à proximité de la sortie de l'alésage du palier dans la chambre hydraulique étant susceptible d'obturer la communication entre la canalisation de réalimentation et la chambre hydraulique par le serrage de la paroi intérieure de sa lèvre intérieure sur la surface cylindrique du piston plongeur après une faible course de celui-ci à partir de sa position de recul extrême. L'invention concerne également le joint annulaire d'étanchéité pour la mise en œuvre de cet émetteur de pression hydraulique.

De tels émetteurs de pression hydraulique, comme est décrit dans le brevet GB-A-2 017 240, par exemple, présentent l'avantage de permettre de réduire le diamètre de la chambre hydraulique par rapport à ceux dotés d'un clapet anti-retour basculant, ce qui constitue un avantage important lorsque l'émetteur est destiné à engendrer des pressions élevées supérieures à 100 bars dont l'utilisation est envisagée pour l'actionnement des pinces de serrage de freins à disque. Cette disposition assure également une meilleure lubrification du contact entre le joint d'étanchéité et la surface polie du piston plongeur.

A l'usage, les émetteurs de pression hydraulique à piston plongeur de ce type présentent cependant souvent l'inconvénient de provoquer la mise en dépression de la chambre hydraulique au cours du rappel du piston plongeur. Une telle situation se rencontre en particulier dans les émetteurs à transformateur de pression pneumatique-hydraulique où le rappel du piston plongeur est effectué par un puissant ressort de rappel du piston pneumatique et où la pression hydraulique est adressée à des organes récepteurs tels que des cylindres de frein, par l'intermédiaire de conduites hydrauliques de relativement faible diamètre afin de réduire le volume total du circuit hydraulique pressurisé dont une partie est située quelquefois à plus d'une dizaine de mètres de l'émetteur, notamment sur les véhicules industriels de grande longueur. L'utilisation de ressorts de rappel très énergiques est indispensable pour s'assurer de la réalimentation du circuit hydraulique par le réservoir hydraulique après chaque actionnement des freins et du desserrage rapide des freins avant la purge complète du circuit pneumatique. Par contre, au cours du rappel rapide du plongeur hydraulique, les conduites hydrauliques de faible section créent des pertes de charge telles que, pendant un court instant notamment à basse température, le débit d'huile entrant en provenance de la liaison hydraulique avec les cylindres de frein et devant traverser un clapet de pression résiduelle à l'entrée de l'émetteur, est inférieur au volume libéré dans la chambre hydraulique par le retrait du piston plongeur. La chambre hydraulique est alors mise en dépression pendant ce court instant jusqu'à la pression de vapeur de l'huile ce qui risque de provoquer des rentrées d'air atmosphérique à l'intérieur de cette chambre hydraulique si l'étanchéité au vide derrière le joint d'étanchéité annulaire coopérant avec le piston plongeur est insuffisante ou détériorée. La présente invention vise à éviter que la chambre hydraulique ne puisse être mise en dépression de façon sensible au cour du rappel brutal du piston plongeur par son ressort de rappel et à assurer de façon certaine la réalimentation de cette chambre dans le cas où elle se trouverait mise en dépression pour une cause quelconque, telle que l'augmentation de volume intempestive de la chambre hydraulique de l'un des récepteurs de la pression hydraulique par suite d'une action extérieure ou bien d'une action brutale de rappel du piston plongeur pour obtenir un effet d'anti-enrayage et éviter ainsi le blocage des roues d'un véhicule freiné par le circuit hydraulique, après la détection de la tendance au blocage de ces roues.

A cet effet, le joint d'étanchéité annulaire comporte une lèvre extérieure relativement plus souple que la lèvre intérieure et qui, en coopérant avec un alésage conjugué ménagé dans l'émetteur et débouchant sur la chambre hydraulique, est susceptible d'obturer par son bord extérieur une chambre de réalimentation de secours reliée à la source de fluide hydraulique, de telle façon qu'en cas de mise en pression de la chambre hydraulique, la pression régnant dans cette chambre confirme l'obturation de la communication entre cette chambre hydraulique et la chambre de réalimentation de secours et qu'en cas de mise en dépression de la chambre hydraulique, notamment pendant la phase de recul du piston plongeur, la lèvre extérieure se déplace pour mettre en communication la chambre hydraulique avec la chambre de réalimentation de secours et annuler ainsi au moins partiellement la dépression apparue dans la chambre hydraulique. La chambre de réalimentation de secours est de préférence annulaire et selon un premier mode de réalisation, elle est reliée à la source de fluide hydraulique par un conduit unique débouchant sur la paroi de cette chambre de réalimentation.

Selon un autre mode de réalisation de l'invention, la chambre de réalimentation est reliée à la source de fluide hydraulique par au moins un passage, tel qu'une rainure, ménagé à la surface du joint annulaire du côté extérieur de la lèvre extérieure et du talon du joint annulaire et est relié à la canalisation de réalimentation qui entoure le piston plongeur en arrière du talon du joint.

Selon encore un autre mode de réalisation, la chambre de réalimentation de secours est annulaire et est délimitée du côté de la chambre hydraulique par un bourrelet ou une languette en saillie sur la lèvre extérieure du côté de l'alésage conjugué.

Selon un autre mode de réalisation protégeant bien le ou les joints d'étanchéité à lèvres de la chambre hydraulique à l'encontre d'une mise en dépression transitoire de celle-ci, le joint d'étanchéité annulaire comporte à sa périphérie du côté opposé à ses deux lèvres une nervure annulaire extérieure qui est accrochée dans une rainure conjuguée solidaire du corps de la chambre hydraulique à l'entrée du palier annulaire de guidage du piston plongeur, de manière à s'opposer à l'aspiration dudit joint annulaire par suite de la mise en dépression de la chambre hydraulique. Un deuxième joint d'étanchéité annulaire à lèvres formant joint de sortie du circuit de fluide hydraulique est disposé à la sortie du palier annulaire vers l'extérieur avec ses lèvres orientées en direction de la chambre hydraulique de manière à s'opposer aux surpressions transitoires apparaissant à la prise de contact entre le joint annulaire principal et le piston plongeur et à délimiter avec ce joint annulaire principal une chambre de réalimentation dans laquelle vient se loger l'extrémité du piston plongeur en position de recul extrême de celui-ci et cette chambre de réalimentation est reliée en permanence à la source de fluide hydraulique à travers le palier respectivement du côté du joint annulaire principal par une série de trous radiaux de grande section et du côté du deuxième joint annulaire à lèvres où l'alésage du palier n'est jamais découvert par le piston plongeur, par une série de trous radiaux de petite section, de manière à réduire l'effet desdites surpressions transitoires et des dépressions éventuelles de la chambre hydraulique sur ce deuxième joint à lèvres.

Le joint d'étanchéité annulaire pour la réalisation d'un émetteur de pression hydraulique selon l'invention et présentant une lèvre intérieure et une lèvre extérieure reliées entre elles par un talon massif doté d'une surface arrière d'appui, est caractérisé en ce que la lèvre extérieure comporte un prolongement annulaire relativement mince et dirigé vers l'extérieur pour délimiter avec la partie périphérique du talon une rainure annulaire destinée à former, en position de service du joint, une chambre de réalimentation.

Selon un autre mode de réalisation du joint selon l'invention, il comporte sur la surface périphérique de son talon jusqu'à ladite rainure annulaire et sur le dos de son talon, au moins une rainure axiale apte à faire communiquer, en position de service du joint, ladite rainure annulaire avec une source de fluide débouchant sur le dos dudit talon de joint.

Le joint peut comporter sur son talon, en prolongement de la surface intérieure de sa lèvre intérieure destinée à coopérer avec la surface extérieure du piston plongeur, au moins un bourrelet annulaire en saillie apte à constituer une surface d'étanchéité supplémentaire coopérant avec ladite surface extérieure du piston plongeur et à jouer le rôle d'un joint torique par rapport à ce piston plongeur.

Comme on l'a déjà mentionné au sujet de l'émetteur de pression hydraulique, le joint peut comporter à sa périphérie du côté opposé à ses deux lèvres une nervure annulaire en saillie destinée à l'accrochage axial du joint dans une rainure de réception.

D'autres buts, avantages et caractéristiques de la présente invention apparaîtront à la lecture de la description de divers modes de réalisation, faite à titre non limitatif et en regard du dessin annexé où :

la figure 1 représente en coupe avec arrachements un émetteur de pression hydraulique selon l'invention et dont le piston plongeur est actionné par un cylindre pneumatique ;

les figures 1a et 1b représentent en coupe et en vue partielle les positions relatives du joint d'étanchéité annulaire et du piston plongeur, respectivement après une course d'actionnement du piston plongeur et au cours d'un retrait rapide de ce piston plongeur ;

les figures 2a et 2b représentent, également en coupe et en vue partielle, les positions relatives du joint d'étanchéité annulaire et du piston plongeur dans un autre mode de réalisation de l'émetteur de pression hydraulique selon l'invention, respectivement avant une course d'actionnement du piston plongeur et au cours d'un retrait rapide du piston plongeur ;

la figure 3 est une vue en coupe transversale à plus grande échelle d'une variante du joint annulaire d'étanchéité utilisé pour la réalisation de l'émetteur hydraulique, ce joint étant positionné par rapport à l'alésage de réception de la lèvre extérieure et au piston plongeur représentés partiellement en traits fins.

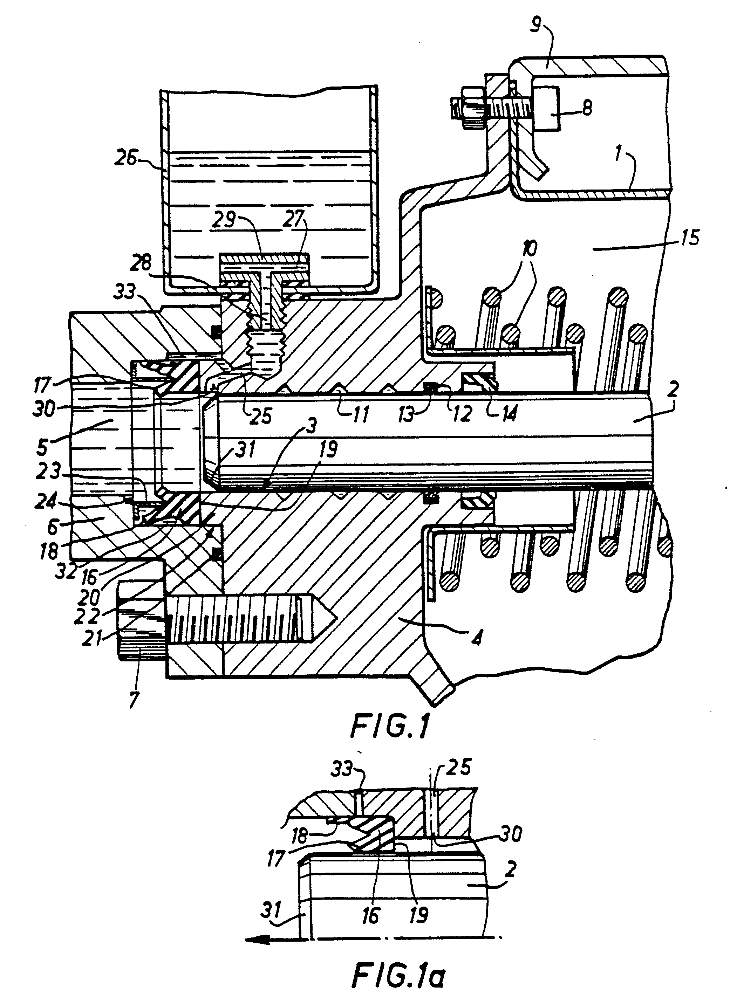

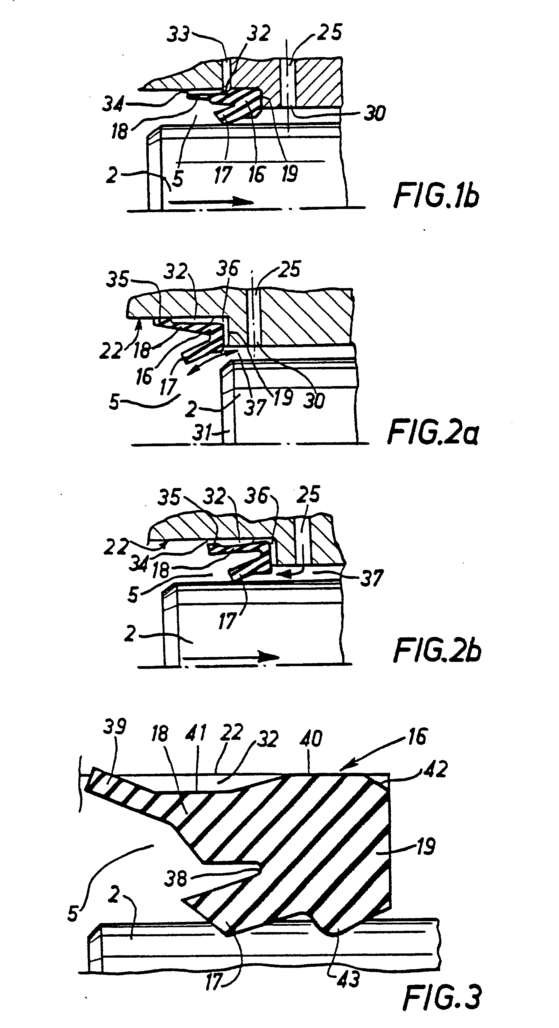

L'émetteur de pression représenté sur la figure 1 comporte un organe d'actionnement constitué d'un cylindre pneumatique 1 dont le piston mobile, non représenté, est solidaire d'une tige 2 formant le piston plongeur de l'émetteur hydraulique. Cette tige 2 est soigneusement rectifiée au poli miroir et se déplace en translation (et éventuellement en rotation), dans l'alésage 3 d'un palier monobloc 4 pour occuper un volume plus ou moins grand à l'intérieur d'une chambre hydraulique 5 ménagée dans un corps creux 6.

Le palier 4 est assemblé par des vis 7 et 8 respectivement au corps creux 6 et à un support 9 servant à fixer l'émetteur au châssis d'un véhicule. Le cylindre pneumatique 1 contient deux ressorts de rappel 10 dont la réaction repousse en permanence vers la droite de la figure le piston pneumatique solidaire de la tige 2. Les ressorts 10 constituent ainsi le ressort de rappel du piston plongeur en position inactive.

L'alésage 3 présente des gorges 11 à section triangulaire et une gorge 12 à section rectangulaire contenant un joint d'étanchéité torique 13. A l'extrémité droite de l'alésage 3 est prévu un lamage qui contient un joint racleur à lèvre 14 qui empêche les poussières contenues dans la chambre de respiration 15 des ressorts 10, de pénétrer vers le joint 13.

Un joint d'étanchéité principal 16 de forme annulaire, à lèvre intérieure 17 et à lèvre extérieure 18, est disposé au débouché de l'alésage 3 dans la chambre hydraulique 5. Ce joint présente de préférence un talon plan 19 qui vient en appui sur l'extrémité annulaire plane d'un prolongement tubulaire 20 du palier 4. Le corps creux 6 est emmanché de façon étanche par un alésage 22 sur le prolongement 20 à l'aide d'un joint torique 21 tandis que la lèvre extérieure 18 du joint principal 16 est logée dans l'alésage 22 et maintenue par le creux central de sa section en U à l'aide d'une pièce annulaire 23 à section en L. L'une des ailes de la section en L est en appui sur l'alésage 22 et sur un lamage 24 du fond de l'alésage 22 tandis que l'autre aile est en appui sur le fond de la section en U du joint annulaire 16 qui ne peut ainsi pas être entraîné vers la gauche de la figure par le frottement de la surface extérieure de la tige 2 sur la lèvre intérieure 17.

Une canalisation de réalimentation 25 est ménagée dans le palier 4 et relie l'intérieur d'un réservoir de fluide hydraulique 26 à la chambre hydraulique 5 par l'intermédiaire de passages radiaux opposés 27 et d'un passage central 28 percés dans un bouchon 29 de fixation du réservoir 26 sur le corps du palier 4. Des joints d'étanchéité annulaires sont interposés, d'une part, entre le bouchon 29 et la paroi du réservoir 26 et, d'autre part, entre la paroi du réservoir 26 et une surface d'étanchéité prévue sur le corps du palier 4 dans lequel est vissée de façon étanche l'extrémité filetée du bouchon 29.

La canalisation de réalimentation 25 vient déboucher dans l'alésage 3 du palier 4 dans une zone 30 qui est découverte par la tige 2 lorsque celle-ci se trouve dans sa position de recul extrême telle que représentée sur la figure 1 et où la tige 2 a quitté le contact avec la lèvre intérieure 17 du joint 16. L'extrémité de la tige 2 qui se trouve en permanence dans la chambre hydraulique présente une surface extérieure de révolution 31 dont les sections transversales sont de diamètre croissant jusqu'au diamètre de la partie cylindrique de la tige 2 située, dans la position de recul extrême représentée sur la figure 1, en arrière de la zone 30 de débouché de la canalisation 25. La surface 31 peut comporter une partie tronconique raccordée par une surface à génératrice courbe à la surface cylindrique de la tige 2.

Selon l'invention, la lèvre extérieure 18 du joint annulaire 16 est relativement plus souple et plus longue que la lèvre intérieure 17 et en coopérant avec l'alésage 22, elle vient obturer par son bord extérieur une chambre annulaire de réalimentation de secours 32 reliée en permanence au réservoir de fluide hydraulique 26 par une canalisation d'alimentation de secours 33 qui débouche dans cette chambre 32 et est reliée par des perçages internes à la canalisation de réalimentation 25, dans la solution représentée à la figure 1. La chambre de secours 32 peut bien entendu être reliée au réservoir 26 par tout autre moyen équivalent tel qu'une canalisation séparée.

Le fonctionnement de l'émetteur représenté sur la figure 1 est décrit ci-après à partir de la position de repos représentée sur la figure. Lorsque le cylindre 1 est mis sous pression, le piston pneumatique solidaire de la tige 2 se déplace vers la gauche de la figure et comprime les ressorts de rappel 10. La tige 2 se déplace vers la gauche de la figure et vient obturer partiellement la zone 30 au débouché de la canalisation 25. Au cours de la prise de contact entre la tige 2 et le joint 16, le fluide hydraulique contenu dans la chambre 5 s'échappe à grande vitesse dans l'espace annulaire de fuite qui est compris entre la surface extérieure de la tige 2, le débouché de l'alésage 3 dans la chambre 5 et la paroi intérieure du joint 16. Le fluide hydraulique est ainsi refoulé à travers la canalisation 25, le passage 28 et les passages radiaux opposés 27 sans provoquer de bouillonnement trop intense de la surface du liquide hydraulique contenu dans le réservoir 26 grâce à la disposition horizontale des passages 27 dont les jets s'opposent.

Dès que la lèvre intérieure 17 du joint 16 vient en contact avec la surface 31, la pression dans l'espace annulaire de fuite devient inférieure à la pression régnant dans la chambre 5 et la lèvre 17 est plaquée radialement sur la surface 31 puis sur la surface extérieure cylindrique polie de la tige 2 et la canalisation de réalimentation 25 est isolée de la chambre 5. Le fluide hydraulique contenu dans la chambre 5 est ensuite refoulé vers les organes à alimenter et la pression monte dans la chambre 5 de façon sensiblement proportionnelle à l'effort exercé sur la tige 2 par le piston pneumatique du cylindre 1.

Comme représenté sur la figure 1a, la pression régnant dans la chambre 5 plaque la lèvre extérieure 18 du joint 16 sur les parois de l'alésage 22 tandis que le talon plan 19 du joint 16 est poussé vers la droite de la figure 1 sur une surface plane annulaire d'appui. La chambre de réalimentation de secours 32 disparaît pratiquement sous l'effet du placage de la lèvre extérieure 18 sur la paroi cylindrique de l'alésage 22 mais le débouché de la canalisation 33 (éventuellement prolongé par une rainure annulaire interne non représentée ménagée dans le corps creux 6 et destinée à s'opposer à la fermeture complète de la chambre de secours 32) existe, toujours prêt à réalimenter la chambre 32.

Dès que l'effort exercé sur la tige 2 en direction de la gauche de la figure 1 diminue ou disparaît, la pression hydraulique régnant dans la chambre 5 repousse la tige 2 vers la droite. Si l'effort de pression pneumatique exercé vers la gauche sur le piston du cylindre 1 disparaît, les ressorts de rappel 10 (dédoublés pour parer à la rupture accidentelle de l'un d'entre eux) viennent tirer la tige 2 vers la droite jusqu'à ce qu'elle échappe au contact de la lèvre 17 même si la chambre 5 est mise en dépression par suite d'une fuite du liquide contenu dans la chambre 5 et dans les organes à alimenter. Le liquide contenu dans le réservoir 26 peut alors s'écouler par gravité dans la chambre 5 pour compenser les fuites ou la consommation des organes récepteurs et l'émetteur de pression est ainsi réarmé automatiquement par les ressorts 10 pour un nouvel actionnement. Le corps creux 6 qui ne vient pas en contact avec la tige 2 constituant le piston plongeur et qui présente un diamètre intérieur minimum peut être réalisé en un matériau esthétique et facile à mouler tel que l'aluminium ou la matière plastique.

La chambre hydraulique 5 peut se trouver mise en dépression au cours du recul de la tige 2 vers la droite de la figure sous l'action de rappel des ressorts 10, soit parce que le circuit hydraulique récepteur a consommé du fluide hydraulique par suite de la course résiduelle des organes récepteurs ou de fuites, soit de façon plus courante et comme expliqué précédemment, parce qu'au cours du rappel rapide vers la droite de la figure de la tige 2 par les ressorts 10, le débit de liquide hydraulique de retour des organes récepteurs est inférieur, par suite des pertes de charge dans les canalisations hydrauliques, au volume libéré par la sortie de la tige 2 formant piston plongeur. Dès qu'une légère dépression apparaît dans la chambre hydraulique 5, la lèvre extérieure souple 18 se décolle du contact avec la paroi de l'alésage 22 comme représenté à la figure 1b et du fluide hydraulique de réalimentation de la chambre 5 en provenance du réservoir 26 peut s'écouler dans le passage annulaire de grande section 34 qui s'ouvre entre la lèvre extérieure 18 et l'alésage 22. La chambre de réalimentation 32 compense ainsi presque instantanément le volume excédentaire libéré pour la tige 2 au cours de son rappel vers la droite et joue ainsi pleinement le rôle de réalimentation de secours conformément à la présente invention. Dans l'hypothèse où, pour une cause quelconque (ressort cassé, coincement de la tige 2 dans l'alésage 3, etc. ), la tige 2 ne pourrait être complètement ramenée vers la droite dans la position de pleine réalimentation représentée à la figure 1, le clapet anti-retour à grande sensibilité constitué par la lèvre extérieure 18 permet la réalimentation continue de la chambre hydraulique 5 en fluide hydraulique, le seul problème étant que l'excès de fluide hydraulique éventuel de la chambre 5 (condition rare et restant de sécurité qui se rencontre surtout en cas d'échauffement du circuit hydraulique) ne pourra être déchargé que par les fuites éventuelles ou la consommation du circuit hydraulique. Pour la réalisation du joint annulaire 16, on notera qu'il est généralement moulé en un matériau élastomère et que l'on peut avantageusement choisir pour la lèvre intérieure 17 un élastomère plus rigide et résistant à l'usure que celui utilisé pour la lèvre extérieure 18 qui ne travaille pas par friction mais par placage et relâchement.

On a représenté sur les figures 2a et 2b un autre mode de réalisation du joint annulaire d'étanchéité 16. Sur la figure 2a qui représente le joint annulaire 16 et la tige 2 dans la même position de départ qu'à la figure 1, on voit que la lèvre extérieure 18 du joint 16 présente un bourrelet ou une languette en saillie 35 placé à la périphérie de la lèvre 18 du côté de l'alésage 22 pour assurer l'étanchéité au contact de la paroi de celui-ci. Par ailleurs, la chambre de réalimentation de secours 32 est reliée au réservoir 26 via la canalisation 25 par plusieurs passages 36 (un seul est ici représenté en coupe) en forme de rainure, ménagés à la surface du joint 16 du côté extérieur de la lèvre 18 et dans le talon 19 où ils sont reliés à la partie de canalisation de réalimentation 37 qui entoure la tige 2 en arrière du talon 19 et au voisinage du débouché 30 de la canalisation de réalimentation 25. En variante (apparemment délicate 2 réaliser par usinage), la ou les rainure(s) 26 peut(peuvent) être ménagée(s) non pas sur la surface extérieure du joint 16 mais à la surface de l'alésage 22 et de l'extrémité annulaire plane du prolongement tubulaire 20.

On voit sur la figure 2b le fonctionnement de l'émetteur de pression réalisé selon cette deuxième variante lorsque la chambre hydraulique 5 est mise en dépression. La lèvre extérieure souple 18 s'incline ou s'ouvre, vers l'intérieur sous l'action de la pression atmosphérique régnant dans la chambre de réalimentation de secours 32 à l'encontre de la dépression et le bourrelet 35 se décolle du contact avec la paroi de l'alésage 22 pour ouvrir un passage annulaire 34 de réalimentation de la chambre 5 à partir de la canalisation annulaire 37 de réalimentation via les rainures 36. Dans ce dernier mode de réalisation de l'invention, les canalisations de réalimentation sont apparemment plus simples mais le joint annulaire 16 est plus complexe.

Le joint d'étanchéité annulaire 16 représenté en coupe à grande échelle à la figure 3 présente plusieurs caractéristiques originales de forme. On reconnaît la lèvre intérieure massive 17 séparée de la lèvre extérieure 18 par une rainure annulaire à fond arrondi 38 sur lequel vient en appui l'aile longue de la pièce annulaire de maintien 23 à section en L. La lèvre extérieure 18 est prolongée par une lèvre mince 39 qui dépasse sur l'alignement de l'alésage 22, repéré par la surface extérieure 40 d'appui du talon 19 dans l'alésage 22. Selon l'invention, la lèvre extérieure 18 présente une rainure annulaire périphérique intérieure 41 qui forme, en combinaison avec la partie périphérique du talon (surface d'appui 40) et la lèvre mince 39, la chambre de réalimentation de secours 32. Du fait de l'épaisseur importante de la lèvre extérieure 18 à son embase, la chambre de réalimentation 32 ne peut pratiquement pas être écrasée complètement même lorsqu'une pression élevée règne dans la chambre hydraulique 5. La réalimentation de secours à partir de la canalisation d'alimentation de secours 33 est ainsi facilitée.

Le talon 19 du joint 16 présente à sa partie périphérique arrière un chanfrein 42 augmentant son élasticité à la compression isostatique et comporte, en prolongement de la lèvre intérieure 17, un bourrelet en saillie 43 apte à jouer pour la tige 2 le rôle d'un joint torique assurant l'étanchéité à la dépression de la chambre 5 par rapport à l'alésage de guidage 3 de cette tige.

Selon une variante de réalisation, le joint d'étanchéité principal 16 est muni à sa périphérie extérieure, du côté du talon 19 opposé au côté des lèvres 17, 18 (voir la figure 3), d'une nervure annulaire en saillie qui vient s'accrocher dans une rainure annulaire conjuguée ménagée dans la paroi de l'alésage 22 de guidage de la lèvre extérieure du joint ou bien dans une pièce intermédiaire (non représentée sur les figures) qui porte le joint 16. Grâce à l'effet d'accrochage du joint 16 par sa nervure dans la nervure conjuguée, la mise en dépression transitoire de la chambre hydraulique 5 ne risque plus de provoquer l'aspiration du joint 16 et son glissement axial dans l'alésage 22, ce qui permet de supprimer la pièce annulaire 23 à section en L particulièrement difficile à accrocher et relativement inefficace à l'égard des petits déplacements axiaux du joint 16. La chambre hydraulique 5 peut ainsi présenter un diamètre d'entrée plus important et une conicité qui constitue une dépouille facilitant le moulage du corps de chambre hydraulique.

Selon un autre mode de réalisation avantageux, le joint 16 n'est plus porté par l'alésage 22 et repoussé après sa mise en place par un prolongement tubulaire 20 du palier 4 traversé de passages tels que le canal de réalimentation 25, mais est accroché par sa nervure annulaire externe à un palier d'étanchéité annulaire monobloc réalisé par exemple en matière plastique à bonnes qualités frottantes et rapporté dans un alésage de palier ménagé à l'entrée d'un corps de chambre hydraulique monobloc venu par exemple de fonderie et remplaçant le corps creux 6 et le palier monobloc 4. Cet alésage de palier est relié par un passage de section importante à un réservoir de fluide hydraulique tel que le réservoir 26. Le palier annulaire monobloc vient en appui, par des portées en saillie, au fond de l'alésage de palier sur une portée annulaire qui débouche sur la chambre de réalimentation de secours 32 ou ce qui est équivalent, sur la rainure annulaire 41 représentée à la figure 3 (de préférence au voisinage de la surface d'appui 40), de manière à ménager des passages radiaux pour le fluide hydraulique en direction de la chambre 32 ou de la rainure 41 qui sont ainsi reliées, par des passages axiaux ménagés à l'intérieur du palier annulaire entre l'alésage de palier et le palier proprement dit, audit passage de section importante et par là, au réservoir 26 de fluide hydraulique.

Du côté de l'entrée de la tige 2 dans le corps de la chambre hydraulique 5, le palier monobloc porte un deuxième joint d'étanchéité à lèvres formant joint de sortie du circuit de fluide hydraulique avec ses lèvres orientées vers la chambre hydraulique 5, de manière à s'opposer aux surpressions transitoires apparaissant à la prise de contact entre le joint 16 et le piston plongeur 2.

Ce deuxième joint annulaire à lèvres délimite avec le joint principal 16 une chambre de réalimentation telle que celle délimitée par la canalisation annulaire 37 et dans laquelle vient se loger l'extrémité du piston plongeur 2 en position de recul extrême de celui-ci, comme représenté à la figure 1. Dans cette position de recul, la partie de la chambre de réalimentation 37 comprise entre les deux joints à lèvres et située du côté de la chambre hydraulique 5, est découverte par le piston plongeur 2 tandis que l'autre partie de la chambre de réalimentation 37 du côté du deuxième joint à lèvres n'est jamais découverte par le piston plongeur 2 et présente ainsi toujours une forme annulaire de faible épaisseur mais est néanmoins reliée en permanence au réservoir 26.

Selon ce dernier mode de réalisation, la partie de la chambre de réalimentation 37 qui est découverte par le piston plongeur 2, est reliée au réservoir 26 via une canalisation de relativement grande section, telle que celle qui suit le passage central 28 à la figure 1, et une rainure annulaire de liaison, par une série de trous radiaux de relativement grande section ménagés à travers la paroi du palier monobloc rapporté (variante non représentée sur les figures). Par contre, la partie de la chambre de réalimentation 37 qui n'est jamais découverte et qui présente donc toujours une forme annulaire de faible épaisseur est reliée à cette canalisation de relativement grande section via sa rainure annulaire par une série de trous radiaux de petite section ménagés à travers la paroi du palier monobloc du côté du deuxième joint à lèvres.

Ce mode de liaison au réservoir 26, différent pour la partie de la chambre de réalimentation susceptible d'être découverte par le piston plongeur 2 (grande section de passage) et pour la partie de la chambre de réalimentation qui n'est jamais découverte par le piston plongeur 2 et est fermée vers l'extérieur par le deuxième joint à lèvres (petite section de passage), présente les avantages suivants : la prise de contact entre le joint principal 16 et le piston plongeur 2 se produit souvent avec une vitesse de translation relativement élevée de ce piston 2 et il s'ensuit un débit de refoulement transitoire mais important du fluide hydraulique vers le réservoir 26. Ce débit s'écoule avec un minimum de perte de charge à travers la série de trous radiaux de grande section et la série de trous radiaux de petite section amortit l'onde de pression de refoulement sur le deuxième joint à lèvres.

Le même phénomène se reproduit en sens inverse lorsque la chambre hydraulique 5 est en dépression au moment où le piston plongeur 2 rappelé vers la droite des figures par les ressorts de rappel 10 cesse d'être en contact avec le joint 16. Le liquide du réservoir 26 est aspiré à travers la série de trous de grande section et la dépression transitoire qui règne autour de la surface d'extrémité 31 du piston plongeur 2 ne se transmet en direction du deuxième joint à lèvres qu'après amortissement à travers la série de trous de petite section et le passage annulaire de très faible épaisseur entre la surface extérieure du piston plongeur 2 et la paroi de l'alésage 3. Le deuxième joint à lèvres ne risque ainsi plus d'être aspiré en direction de la chambre hydraulique 5 par une dépression transitoire et les risques d'une aspiration d'air atmosphérique dans la chambre de réalimentation 37 en dessous des lèvres du deuxième joint d'étanchéité sont si réduits qu'il est possible d'orienter les lèvres de ce deuxième joint en direction du circuit hydraulique afin de mieux s'opposer aux surpressions transitoires à la prise de contact entre le piston plongeur 2 et le joint principal 16. On notera que dans le mode de réalisation qui vient d'être décrit avec un palier rapporté en matière plastique à l'intérieur du corps de palier 4 à la place des gorges 11 et 12 et du joint racleur 14 de la figure 1, ce palier repoussé en butée sur une surface d'appui au fond de l'alésage de palier, est maintenu dans son alésage par une rondelle de butée qui peut également servir de butée à l'encontre des surpressions transitoires de réalimentation pour le deuxième joint annulaire qui, par ailleurs, peut être accroché au palier par une nervure annulaire de talon similaire à celle du joint principal 16 afin d'éviter l'aspiration du deuxième joint à lèvres par les mises en dépressions transitoires de la réalimentation 37.

## Revendications

1. Emetteur de pression hydraulique comportant un piston plongeur (2) à surface cylindrique guidé dans un palier (4) et mobile en translation dans une chambre hydraulique (5) destinée à être reliée, d'une part, en permanence à au moins un organe récepteur de fluide hydraulique sous pression et, d'autre part, en position de recul extrême du piston (2) et par l'intermédiaire d'une canalisation de réalimentation (25), à une source de fluide hydraulique (26), un joint d'étanchéité annulaire principal (16) à deux lèvres situé à proximité de la sortie de l'alésage (3) du palier (4) dans la chambre hydraulique (5) étant susceptible d'obturer la communication entre la canalisation de réalimentation (25) et la chambre hydraulique (5) par le serrage de la paroi intérieure de sa lèvre intérieure (17) sur la surface cylindrique du piston plongeur (2) après une faible course de celui-ci à partir de sa position de recul extrême, caractérisé en ce que le joint d'étanchéité annulaire (16) comporte une lèvre extérieure (18) relativement plus souple que la lèvre intérieure (17) et qui, en coopérant avec un alésage conjugué (22) ménagé dans l'émetteur et débouchant sur la chambre hydraulique (5), est susceptible d'obturer par son bord extérieur une chambre de réalimentation de secours (32) reliée à la source (26) de fluide hydraulique, de telle façon qu'en cas de mise en pression de la chambre hydraulique (5), la pression régnant dans cette chambre confirme l'obturation de la communication entre cette chambre hydraulique et la chambre de réalimentation de secours (32) et qu'en cas de mise en dépression de la chambre hydraulique (5), notamment pendant la phase de recul du piston plongeur (2), la lèvre extérieure (18) se déplace pour mettre en communication la chambre hydraulique (5) avec la chambre de réalimentation de secours (32) et annuler ainsi au moins partiellement la dépression apparue dans la chambre hydraulique.

2. Emetteur de pression hydraulique selon la revendication 1, caractérisé en ce que la chambre de réalimentation de secours (32) est annulaire.

3. Emetteur de pression hydraulique selon l'une des revendications 1 ou 2, caractérisé en ce que le joint d'étanchéité annulaire (16) comporte à sa périphérie, du côté opposé à ses deux lèvres, une nervure annulaire extérieure qui est accrochée dans une rainure conjuguée solidaire du corps de la chambre hydraulique à l'entrée du palier annulaire (4) de guidage du piston plongeur (2), de manière à s'opposer à l'aspiration dudit joint annulaire (16) par suite de la mise en dépression de la chambre hydraulique (5).

4. Emetteur de pression hydraulique selon l'une des revendications 1 à 3, caractérisé en ce qu'un deuxième joint d'étanchéité annulaire à lèvres formant joint de sortie du circuit de fluide hydraulique est disposé à la sortie du palier annulaire (4) vers l'extérieur avec ses lèvres orientées en direction de la chambre hydraulique (5), de manière à s'apposer aux surpressions transitoires apparaissant à la prise de contact entre le joint annulaire principal et le piston plongeur (2) et à délimiter avec ce joint annulaire principal (16) une chambre de réalimentation (37) dans laquelle vient se loger l'extrémité (31) du piston plongeur (2) en position de recul extrême de celui-ci, et en ce que cette chambre de réalimentation (37) est reliée en permanence à la source (26) de fluide hydraulique à travers le palier (4) respectivement du côté du joint annulaire principal (16) par une série de trous radiaux de grande section et du côté du deuxième joint annulaire à lèvres, où l'alésage (3) du palier (4) n'est jamais découvert par le piston plongeur (2), par une série de trous radiaux de petite section, de manière à réduire l'effet desdites surpressions transitoires et des dépressions éventuelles de la chambre hydraulique (5) sur ce deuxième joint à lèvres.

5. Emetteur selon l'une des revendications 1 à 4, caractérisé en ce que la chambre de réalimentation de secours (32) est reliée à la source de fluide hydraulique (26) par un conduit unique (33) débouchant sur la paroi de cette chambre de réalimentation.

6. Emetteur selon l'une des revendications 1 à 5, caractérisé en ce que la chambre de réalimentation (32) est reliée à la source de fluide hydraulique par au moins un passage (36), tel qu'une rainure, ménagé à la surface du joint annulaire (16) du côté extérieur de la lèvre extérieure (18) et du talon (19) du joint annulaire et est relié à la canalisation de réalimentation (37) qui entoure le piston plongeur (2) en arrière du talon (19).

7. Emetteur selon l'une des revendications 1 à 6, caractérisé en ce que la chambre de réalimentation de secours (32) est annulaire et est délimitée du côté de la chambre hydraulique (5) par un bourrelet (35) ou une languette en saillie sur la lèvre extérieure (18) du côté de l'alésage conjugué (22).

8. Joint d'étanchéité annulaire pour un émetteur de pression hydraulique selon l'une des revendications 1 à 7 et présentant une lèvre intérieure et une lèvre extérieure reliées entre elles par un talon massif doté d'une surface arrière d'appui, caractérisé en ce que la lèvre extérieure (18) comporte un prolongement annulaire (39) relativement mince et dirigé vers l'extérieur pour délimiter avec la partie périphérique (40) du talon (19) une rainure annulaire (41) destinée à former, en position de service du joint, une chambre de réalimentation (32).

9. Joint selon la revendication 8, caractérisé en ce qu'il comporte sur la surface périphérique de son talon (19) jusqu'à ladite rainure annulaire (41) et sur le dos de son talon (19), au moins une rainure axiale (36) apte à faire communiquer, en position de service du joint, ladite rainure annulaire (41) avec une source de fluide (26) débouchant sur le dos dudit talon de joint (19).

10. Joint selon la revendication 8 ou 9, caractérisé en ce qu'il comporte à sa périphérie du côté opposé à ses deux lèvres (17, 18) une nervure annulaire en saillie destinée à l'accrochage axial du joint dans une rainure de réception.

## Claims

1. Hydraulic pressure generator comprising a plunger (2) having a cylindrical surface, which is guided in a bearing (4) and translationally movable in a hydraulic chamber (5) adapted to be connected, on the one hand, permanently to at least one hydraulic pressurized fluid-receiving organ and, on the other hand, in the extreme rear position of said plunger (2), and through the intermediary of a refeeding conduit (25), to a hydraulic fluid source (26), while a main annular seal (16) having two lips, which is located adjacent to the outlet of the bore (3) of said bearing (4) within the hydraulic chamber (5) is adapted to seal the communication between said refeeding conduit (25) and said hydraulic chamber (5) by pressing the inner wall of its inner lips (17) onto the cylindrical surface of said plunger (2) after a small displacement thereof from its extreme end position, characterized in that said annular seal (16) comprises an outer lip (18) which is comparatively more flexible than the inner lip (17) is and which, by cooperating with a corresponding bore (22) provided in the pressure generator and opening into said hydraulic chamber (5), is adapted to seal by its outer edge an auxiliary refeeding chamber (32) connected to the hydraulic fluid source (26), the arrangement being such that when said hydraulic chamber (5) is pressurized the pressure prevailing within said chamber enhances the sealing of the connection between said hydraulic chamber (5) and said auxiliary refeeding chamber (32), and that when said hydraulic chamber (5) its depressurized, especially during the rearward displacement phase of said plunger (2), the outer lip (18) moves so as to interconnect said hydraulic chamber (5) and said auxiliary refeeding chamber (32) and thus to suppress at least partially the depression occurring in said hydraulic chamber.

2. Hydraulic pressure generator according to claim 1, characterized in that said auxiliary refeeding chamber (32) has an annular shape.

3. Hydraulic pressor generator according to any one of claims 1 and 2, characterized in that said annular seal (16) is provided at its periphery, on the side opposite to its two lips, with an outer annular rib engaging an associated groove of the body of said hydraulic chamber at the inlet of said annular bearing (4) which guides said plunger (2), so as to prevent said annular seal (16) from being sucked in under the effect of a pressure decrease in said hydraulic chamber (5).

4. Hydraulic pressure generator according to any one of claims 1 to 3, characterized in that a second annular seal having lips and constituting an outlet seal for the hydraulic fluid circuit is mounted at the outlet of said annular bearing towards the outside, its lips being oriented in the direction of said hydraulic chamber (5), so as to counter-act the temporary overpressure occurring at the time of engagement between the main annular seal and said plunger (2), and so as to define together with said main annular seal (16) a refeeding chamber (37) which is engaged by the end (31) of said plunger (2) when the latter is in its extreme rear position ; and in that said refeeding chamber (37) is permanently connected to the hydraulic fluid source (26) through said bearing (4), respectively — on the side of the main annular seal (16) — by means of a series of radial passages having a large section, and — on the side of the second annular seal provided with lips, where the bore (3) of said bearing (4) is never opened by said plunger (2) — by a series of radial passages having a small section, so as to reduce the effects exerted by said possible temporary overpressure and pressure decrease in the hydraulic chamber (5) on said second seal provided with lips.

5. Generator according to any one of claims 1 to 4, characterized in that said auxiliary refeeding chamber (32) is connected to said hydraulic fluid source (26) through a single conduit (33) opening at the wall of said refeeding chamber.

6. Generator according to any one of claims 1 to 5, characterized in that said refeeding chamber (32) is connected to said hydraulic fluid source (26) through at least one passage (36), such as a groove, provided on the surface of said annular seal (16) on the outer side of said outer lip (18) and of the heel (19) of said annular seal, and is connected the refeeding channel (37) surrounding said plunger behind said heel (19).

7. Generator according to any one of claims 1 to 6, characterized in that said auxiliary refeeding chamber (32) has an annular shape and is delimited on the side of said hydraulic chamber (5) by a protruding bead (35) or tongue provided on said outer lip (18) on the side of said corresponding bore (22).

8. Annular seal for a hydraulic pressure generator according to any one of claims 1 to 7, comprising an inner lip and an outer lip which are interconnected by a solid heel having a rear bearing surface, characterized in that said outer lip (18) comprises an annular extension (38) of comparatively small thickness, which is directed outwardly, so as to define together with the peripheral portion (40) of said heel (19) an annular groove (41) adapted to constitute a refeeding chamber (32) when said seal is in its working position.

9. Seal according to claim 8, characterized in that it comprises on the peripheral surface of its heel (19), up to said annular groove (41) and on the back-side of its heel (19), at least one axial groove (36) adapted to connect, when said seal is its working position, said annular groove (41) to a fluid source (26) opening into the back-side of the heel of said seal (19).

10. Seal according to claims 8 or 9, characterized in that it comprises at its periphery, on the side opposite to its two lips (17, 18), a protruding annular rib adapted axially to engage the seal in a receiving groove.

## Patentansprüche

1. Hydraulischer Druckgeber mit einem Tauchkolben (2), der eine zylindrische Oberfläche aufweist und in einem Lager (4) geführt ist und ferner in einer Hydraulikkammer (5) verschiebbar ist, die einerseits ununterbrochen mit wenigstens einem Aufnahmeorgan für ein hydraulisches Druckmedium und andererseits bei rückwärtiger Endlage des Kolbens (2) über eine Nachspeiseleitung (25) mit einer Hydraulikmediumquelle (26) verbunden ist, wobei eine ringförmige Hauptdichtung (16) mit zwei Lippen, die in Nähe der Auslassöffnung der Bohrung (3) des Lagers (4) in der Hydraulikkammer (5) angeordnet ist, die Verbindung zwischen der Nachspeiseleitung (25) und der Hydraulikkammer (5) unterbrechen kann, indem die Innenwandung seiner unteren Lippe (17) sich an die zylindrische Oberfläche des Tauchkolbens (2) nach einer geringen Rückwärtsbewegung des letzteren von seiner rückwärtigen Endstellung ab anpresst, dadurch gekennzeichnet, dass die ringförmige Dichtung (16) eine äussere Lippe (18) besitzt, die verhältnismässig biegsamer ist, als die innere Lippe (17) und die in Zusammenwirkung mit einer im Druckgeber vorgesehenen und in die Hydraulikkammer (5) mündenden, entsprechenden Bohrung (22) fähig ist, durch ihren äusseren Rand eine mit der Hydraulikmediumquelle (26) verbundene Hilfsnachspeisekammer (32) zu verschliessen, derart, dass bei Druckbeaufschlagung der Hydraulikkammer (5) der in dieser Hydraulikkammer vorliegende Druck den Verschluss der Verbindung zwischen dieser Hydraulikkammer und der Hilfsnachspeisekammer (32) verstärkt, und dass bei Abfall des Druckes in der Hydraulikkammer (5), insbesondere bei Rücklauf des Tauchkolbens (2), die äussere Lippe (18) bewegt wird, um die Hydraulikkammer (5) mit der Hilfsnachspeisekammer (32) zu verbinden und somit den in der Hydraulikkammer auftretenden Unterdruck wenigstens teilweise aufzuheben.

2. Hydraulischer Druckgeber nach Anspruch 1, dadurch gekennzeichnet, dass die Hilfsnachspeisekammer (32) ringförmig gestaltet ist.

3. Hydraulischer Druckgeber nach Anspruch 1 oder 2, dadurch gekennzeichnet, dass die ringförmige Dichtung (16) an ihrem Umfang auf der ihren zwei Lippen gegenüberliegenden Seite eine äussere ringförmige Rippe aufweist, die in eine entsprechende Nut des Hydraulikkammergehäuses am Eingang des den Tauchkolben (2) führenden ringförmigen Lagers (4) eingreift, um dem Einsaugen der ringförmigen Dichtung (16) unter der Einwirkung des Unterdruckes in der Hydraulikkammer (5) entgegenzuwirken.

4. Hydraulischer Druckgeber nach einem der Ansprüche 1 bis 3, dadurch gekennzeichnet, dass eine zweite, eine Auslassdichtung des Hydraulikkreislaufs bildende, mit Lippen versehene, ringförmige Dichtung an dem nach aussen gerichteten Auslass des ringförmigen Lagers (4) derart angeordnet ist, dass seine Lippen sich in Richtung der Hydraulikkammer (5) erstrecken, sodass sie den zeitweilig bei der Berührung zwischen der ringförmigen Hauptdichtung und dem Tauchkolben (2) auftretenden Überdrücken entgegenwirken und zusammen mit dieser ringförmigen Hauptdichtung (16) eine Nachspeisekammer (37), in die das Ende des Tauchkolbens (2) bei dessen rückwärtiger Endlage eintritt; sowie dadurch, dass die Hachspeisekammer (37) dauernd mit der Hydraulikmediumquelle (26) unter Zwischenschaltung des Lagers (4) verbunden ist, und zwar einerseits auf der Seite der ringförmigen Hauptdichtung (16), vermittels mehrerer radialer Bohrungen mit grossem Querschnitt und andererseits auf der Seite der zweiten, Lippen aufweisenden ringförmigen Dichtung, wo die Bohrung (3) des Lagers (4) vom Tauchkolben (2) nie freigegeben wird, durch mehrere radiale Bohrungen kleinen Durchmessers, derart, dass die auf die zweite, Lippen aufweisende Dichtung einwirkenden zeitweiligen Überdrücke und ggf. Unterdrücke der Hydraulikkammer (5) abgeschwächt werden.

5. Druckgeber nach einem der Ansprüche 1 bis 4, dadurch gekennzeichnet, dass die Hilfsnachspeisekammer (32) mit der Hydraulikmediumquelle (26) durch eine einzige Leitung (33) verbunden ist, die in der Wandung dieser Nachspeisekammer mündet.

6. Druckgeber nach einem der Ansprüche 1 bis 5, dadurch gekennzeichnet, dass die Nachspeisekammer (32) mit der Hydraulikmediumquelle (26) durch wenigstens einen Kanal (36), wie Nut, verbunden ist, der in die Oberfläche der ringförmigen Dichtung (16) auf der Aussenseite der äusseren Lippe (18) und der Ferse (19) der ringförmigen Dichtung eingearbeitet und mit der Nachspeiseleitung (37) verbunden ist, welche den Tauchkolben (2) hinter der Ferse (19) umgibt.

7. Druckgeber nach einem der Ansprüche 1 bis 6, dadurch gekennzeichnet, dass die Hilfsnachspeisekammer (32) ringförmig ausgebildet und auf der Seite der Hydraulikkammer (5) durch einen auf der Seite der entsprechenden Bohrung (22) von der äusseren Lippe (18) abspringenden Wulst (35) bzw. Zunge begrenzt ist.

8. Ringförmige Dichtung für einen hydraulischen Druckgeber nach einem der Ansprüche 1 bis 7, mit einer inneren Lippe und einer äusseren Lippe, die durch eine eine hintere Auflagefläche besitzende, volle Ferse miteinander verbunden sind, dadurch gekennzeichnet, dass die äussere Lippe (18) eine verhältnismässig dünne, ringförmige Verlängerung (39) aufweist, die nach aussen gerichtet ist, um zusammen mit dem Umfangsteil (40) der Ferse (19) eine ringförmige Nut (41) zu begrenzen, welche in der Arbeitslage der Dichtung eine Nachspeisekammer (32) bilden soll.

9. Dichtung nach Anspruch 8, dadurch gekennzeichnet, dass sie an der Umfangsoberfläche ihrer Ferse (19) bis zur ringförmigen Nut (41) und auf der rückwärtigen Fläche ihrer Ferse (19) wenigstens eine axiale Nut (36) aufweist, durch welche bei Arbeitslage der Dichtung die ringförmige Nut (41) mit einer Mediumsquelle (26) verbunden wird, die in der rückwärtigen Oberfläche der Dichtungsferse (19) mündet.

10. Dichtung nach Anspruch 8 oder 9, dadurch gekennzeichnet, dass sie auf der ihren beiden Lippen (17, 18) entgegengesetzten Seite an ihrem Umfang eine ringförmige, hervorspringende Rippe aufweist, die fähig ist, axial in eine Aufnahmenut der Dichtung einzugreifen.

FIG.1

FIG.1a

*FIG.1b*

*FIG.2a*

*FIG.2b*

*FIG.3*